# EUROPÄISCHE PATENTSCHRIFT

(11) **EP 1 694 975 B1**
(45) Veröffentlichungstag und Bekanntmachung des Hinweises auf die Patenterteilung: **19.05.2010**
(21) Anmeldenummer: 04802885.6
(22) Anmeldetag: 06.12.2004
(51) Int. Cl.: F16C 35/067, F16C 33/58, F16C 19/18, B60B 27/00

(54) **AUSSENRING EINES RADLAGERS IN EINEM RADTRÄGER**
OUTER RING OF A WHEEL BEARING MOUNTED IN A WHEEL CARRIER
BAGUE EXTERIEURE DE ROULEMENT DE ROUE DANS UN SUPPORT DE ROUE

(30) Priorität: 18.12.2003 DE 10359643
(43) Veröffentlichungstag der Anmeldung: 30.08.2006
(73) Patentinhaber: Schaeffler Technologies GmbH & Co. KG, 91074 Herzogenaurach (DE)
(72) Erfinder: NIEBLING, Peter, 97688 Bad Kissingen (DE); HEIM, Jens, 97493 Bergrheinfeld (DE); HOFMANN, Heinrich, 97422 Schweinfurt (DE); LANGER, Roland, 97523 Schwanfeld (DE); DLUGAI, Darius, 97422 Schweinfurt (DE); DÖPPLING, Horst, 91074 Herzogenaurach (DE); STEINBERGER, Wolfgang, 91074 Herzogenaurach (DE)
(86) Internationale Anmeldenummer: PCT/DE2004/002677
(87) Internationale Veröffentlichungsnummer: WO 2005/059390

(56) Entgegenhaltungen:
- DE-A1- 2 753 108
- DE-A1- 2 833 362
- DE-A1- 3 004 316
- DE-A1- 3 536 697
- DE-A1- 4 035 811
- HERMANN ROLOFF / WILHELM MATEK: "Maschinenelemente" 1972, FRIEDRICH VIEWEG + SOHN GMBH VERLAG , BRAUNSCHWEIG 1 , XP002324485 Seite 240 - Seite 241
- MARTIN KLEIN: "EINFÜHRUNG IN DIE DIN-NORMEN" 1970, B. G. TEUBNER , STUTTGART 1 , XP002324486 Seite 601 - Seite 602; Tabellen 602.1,602.2

## Beschreibung

### Gebiet der Ereindung

Die Erfindung betrifft einen Außenring eines Radiagers, der Außenring mit einem hohlzylindrischen Abschnitt und mit einem von dem hohlzylindrischen Abschnitt radial nach außen abgehenden Flansch, wobei der Flansch an einer konkaven Kehle in den Abschnitt übergeht.

### Hintergrund der Erfindung

DE 39 40 395 A1 beschreibt eine Radlagerung mit einem Außenring, Wälzkörpern und zwei Innenringen, bei der der Außenring axial zwischen den Stirnseiten und von den Stirnseiten weg einen radialen Flansch aufweist mit dem die Radlagerung aufgehängt ist. Das Radlager ist über den Flansch axial und radial am Radträger fest. Ein sich dem Flansch axial anschließender hohlzylindrischer Abschnitt des Außenringes sitzt in einem Loch des Trägers, so dass das der Außenring mittels des Flansches axial und zumindest mit dem Abschnitt zumindest teilweise radial an dem Träger anliegt. Der Außenring ist in der Kehle an dem Übergang von dem Flansch zu dem Abschnitt hoch belastet. Die Kehle Ist deshalb zum Vermelden von Kerbbrüchen gewöhnlich mit einem Radius verrundet. Die In der Kehle vorherrschenden Spannungen sind jedoch nach wie vor zu hoch, zumal der Außenring auch über die Kehle an dem Träger anliegt und dadurch zusätzliche Spannungen in dem Flansch unter Last aufgebaut werden.

Aus DE 11 35 36 697 A1 ist ein Tragkörper eines Wälzlagers bekannt, der mit einem Außenring eines Wälzlagers einstückig verbunden ist. Dieser Tragkörper Ist mit einem angeformten Flansch versehen, der über einen hohlkehlenförmig gekrümmten Übergangsbereich in eine Anlagefläche des Außenringes übergeht.

Aus DE 40 35 811 A1 ist ein Außenring eines Radlagers bekannt, der einen radialen Flansch zur axialen Befestigung an einem Radträger aufweist.

### Zusammenfassung der Erfindung

Die Aufgabe der Erfindung Ist es daher, einen Außenring für eine Radlagereinheit zu schaffen, mit dessen Einbau an oder in einen Radträger oder ähnliches die zuvor genannten Nachteile vermieden sind.

Diese Aufgabe ist nach dem Gegenstand des Anspruches 1 gelöst.

Der Flansch liegt an dem Radträger vorzugsweise nur abschnittweise axial an. Dabei liegt der Außenring mit einem hohlzylindrischen Abschnitt radial und mit dem Flansch axial so an dem Radträger an, dass der Radträger an der konkaven Kehle, an der der Flansch in den Abschnitt übergeht, nicht anliegt. Die konkave Kontur der Kehle geht dabei, in einem Längsschnitt durch den Außenring entlang der Rotationsachse des Außenringes betrachtet, an einem ersten Übergang z. B. in eine Kreisringfläche des Flansches und an einem zweiten Übergang z.B. in eine zylindrische Mantelfläche des Abschnittes über. Der erste und der zweite Übergang enden alternativ zum Beispiel jeweils in einer freistichartig geformten Ringnut in dem Flansch bzw. in dem Abschnitt. Dabei ist von besonderer Bedeutung, dass ein senkrechter Abstand zwischen einer gedachten axialen Verlängerung der Mantelfläche des Flansches und dem ersten Übergang kleiner ist als ein zur Rotationsachse paralleler Abstand zwischen einer gedachten radialen Verlängerung der Mantelfläche und dem zweiten Übergang.

Anhand von Versuchen wurde nachgewiesen, dass sich durch diese Gestaltung der Kontur die maximale Kerbspannung in der Kehle durch um ca. 30% reduzieren lässt. Die Kehle ist dabei vorteilhaft durch wenigstens zwei aufeinander folgende Radien zwischen den Übergängen beschrieben, wobei wenigstens ein erster Radius radial an dem Übergang in den Flansch und wenigsten ein zweiter Radius axial an dem Übergang in den ersten Abschnitt übergeht. Die Radien sind in dem Längsschnitt in Richtung der Übergänge entweder durch eine Gerade voneinander getrennt, oder gehen vorzugsweise zwischen dem Flansch und dem Abschnitt ineinander über.

Das Radlager ist mittels des Flansches an dem Radträger o. ä. aufgehängt oder zumindest teilweise radial in dem Radträger radial abgestützt.

Der Außenring ist zumindest abschnittsweise zumindest radial zur Rotationsachse in dem Radträger so abgestützt, dass der axial endseitig des Außenringes ausgebildete Flansch axial an dem Radträger und radial an dem Außenring anliegt, ohne dass der Träger Kontakt zur Kehle hat. Zusätzliche Spannungen in der Kehle durch den Einfluss von scharfen Kanten des Trägers ist auch durch eine ausreichend dimensionierte Fase an dem Loch vermieden.

Der Abschnitt des Außenringes, an dem zumindest teilweise Laufbahnen für die Wälzkörperreihen ausgebildet sind, ist radial vollständig in dem Radträger abgestützt. Dadurch ist in der Regel das gesamte Radlager von dem Radträger umfasst. Über den Flansch ist das Radlager axial in dem Loch zum Träger gesichert, da der Flansch mit geeigneten Mitteln an dem Flansch befestigt ist. Das axiale Wandern des Außenringes im Fahrbetrieb ist vermieden. Außerdem ist die Kehle an dem Übergang vom Flansch zu dem Außenring von vorneherein entlastet, da der Außenring sich unter Last radial in dem Träger abstützt.

Unter Radlager sind in diesem Sinne alle ein-, zwei- und mehrreihigen Radlager mit Rollen und/oder Kugeln als Wälzkörper, mit einem oder mehr ein- bzw. mehrteiligen Innenringen zu verstehen, die in den unterschiedlichsten Anordnungen, wie in Radial- oder Schrägkugellageranordnung bzw. wie in Radial- oder Schrägrollenlageranordnung ausgeführt sind. Alternativ ist eine oder sind alle der Innenlaufbahnen nicht an einem/mehreren Innenringen sondern direkt an einer in dem Radlager angeordneten Nabe ausgebildet.

Die Nabe eines Radlagermoduls für ein getriebenes oder nicht getriebenes Rad ist vor dem Einbau der Radlagerung in den Radträger in dem Radlager zum Beispiel durch einen Bördelbord an der Nabe fest. Der Bördelbord hintergreift dabei die Lageranordnung so, dass die Nabe untrennbar von dem Radlager an dem Radlager fest ist. Alternativ dazu wird die Nabe bzw. ein Bolzen, mit dem das Rad in der Radlagerung drehbar zum Radträger gelagert ist, erst eingesetzt, wenn das Radlager an dem Träger fest ist.

Eine weitere Ausgestaltung der Erfindung sieht vor, dass der Außenring relativ dünnwandig und somit im Vergleich zu dem steifen das Loch umgebenden Gehäuse elastisch ist. Aufgrund der dünnen Querschnitte der Wand weist der Außenring vor der Montage zumindest an dem Abschnitt, mit dem der Außenring in das Loch eingepresst ist, im Querschnitt quer zur Rotationsachse betrachtet, außen und innen insbesondere an den Laufbahnen Abweichungen von der idealen Rundheit auf. Diese Abweichungen sind wesentlich größer als die Abweichungen von der idealen Rundheit in dem Loch, da die Rundheit des Loches durch spanabhebende Bearbeitung genau ist. Die letztendlich funktionsbedingten Rundheiten an der Laufbahn sind an dem Außenring erst hergestellt, wenn der Außenring in das Loch eingepresst ist.

Der Außenring ist durch das Einpressen im Durchmesser eingeschnürt und den Rundheiten des Loches angepasst. Diese elastische Formänderung überträgt sich auf die Geometrie der Laufbahnen, so dass der Durchmesser der Laufbahnen in den Kontaktzonen die notwendigen Anforderungen hinsichtlich zulässiger Abweichungen von der idealen Rundheit erfüllt. Außerdem ist die elastische Formänderung u. a. auch für die notwendige Spielfreiheit der Radlagerung vorteilhaft, wenn das Radlager komplett als Einheit montiert wird. Das Loch in dem vergleichsweise zu dem Außenring starren Radträger weist im Wesentlichen die Ausgangsgeometrie vor dem Einpressen des Radlagers auf. Der Außenring sitzt fest in dem Träger, wodurch die Knackgeräusche vermieden sind.

Der dünnwandige Außenring ist mit dem Flansch vorzugsweise einteilig ausgebildet, der Flansch kann aber auch an dem Außenring durch Schweißen oder durch einen kraftschlüssigen und/oder formschlüssigen Sitz befestigt sein. Eine Ausgestaltung der Erfindung sieht vor, dass der Außenring aus umgeformten Material gebildet ist. Die Gestalt des Außenringes mit allen seinen Formelementen ist demnach auch durch Umformen hergestellt. Trennende oder spanabhebende Bearbeitung ist nur auf einen sehr geringen Umfang der Bearbeitung im Vergleich zum Umfang der spanlosen Bearbeitung begrenzt. So sind durch Trennen bzw. Lochen nur überschüssiges Material, Ränder, Grate oder weiter Ähnliches vom Formteil entfernt. Spanabhebend sind gegebenenfalls nur die Laufbahnen durch Feinbearbeitung wie Schleifen, Läppen oder Polieren nachgearbeitet. Unter dem Begriff Kaltumformen sind alle die Umformverfahren zu verstehen, bei denen die Kontur des hohlen Außenringes durch Dehnen oder Stauchen, Aufweiten bzw. Einschnüren und dabei plastische Formänderung des Ausgangsmateriales ohne Werkstofftrennung herstellbar sind. Derartige Verfahren sind z. B. Ziehen, Tiefziehen, Rollieren, Pressen und Kombinationen der vorgenannten Verfahren.

Als Rohlinge für die Herstellung der Außenringe sind z. B. Rohre und Bleche vorgesehen. Ein Rohling aus einem Rohr ist durch Aufweiten, Rollieren, Einschnüren, Stauchen und Umlegen von Rändern zu dem fertigen Außenring bearbeitet. Aus Blech hergestellte Außenringe sind durch Ziehen und weitere einzelne bzw. Kombinationen der vorgenannten Verfahren hergestellt. In diesem Fall sieht eine Ausgestaltung der Erfindung vor, dass der Flansch axial von der Stirnseite des Außenringes bis an den Radträger, an dem der Flansch anliegt, genauso breit ist wie das Ausgangsmaterial des Bleches vor dem Herstellen des Außenringes dick war. Bevorzugte Werkstoffe sind kaltformbare Lagerwerkstoffe wie z. B. 100Cr6 oder auch alle geeigneten Tiefziehstähle.

Der Außenring zeichnet sich durch ein geringes Gewicht aus, da Ausgangsmaterial geringer Wandstärke bzw. geringer Blechdicke eingesetzt ist. Die Stärke bzw. Dicke des Ausgangsmateriales liegt vorzugsweise im Bereich von 2, 4 bis 5 mm. Mit dem dünnwandigen Außenring aus spanabhebender oder spanloser Herstellung ist der Gesamtanteil der Radlagereinheit an dem Gewicht der ungefederten Massen reduziert.

Die Radlagerung für die Lagerung angetriebener und/oder nicht angetriebener Räder an Fahrzeugen ist mit dem Außenring ist so in den Radträger eingebaut, dass der Flansch des Außenringes zum Fahrzeug hin oder vom Fahrzeug weg weist. An Radlagerungen, mit denen angetriebene Räder gelagert werden, liegt der Flansch des Außenringes alternativ entweder an der Seite des Radträgers an, die dem Radflansch zugewandt ist oder der Flansch liegt an einer Seite des Radträgers an, die von dem Radflansch abgewandt ist.

Der Flansch ist vorzugsweise mit Bolzen, die zum Beispiel in den Radträger eingeschraubt oder eingepresst werden, an dem Radträger befestigt. Denkbar sind auch anderer Befestigungselemente, wie Klammern oder ähnliches die den Flansch an einer von dem Radträger axial abgewandten Seite des Flansches an wenigstens einem Befestigungsrand axial hintergreifen. Alternativ dazu sind an dem Radträger durch Schweißen oder Einschrauben befestigte Bolzen vorgesehen, auf die jeweils eine Mutter aufgeschraubt und gegen den Flansch axial vorgespannt ist. Die Bolzen durchgreifen axiale Ausnehmungen an dem Flansch.

Weitere Ausgestaltungen sowie Ausführungsformen der Erfindung sind in den Figuren 1 bis 2 - 2b näher beschrieben.

Es zeigen:
- Figur 1: ein Radlagermodul in einem Längsschnitt entlang einer Rotationsachse,
- Figur 2: einen Außenring aus Figur 1 in Vollansicht,
- Figur 2a: die Formabweichung des Außenrings als Einzelteil und
- Figur 2b: eine vergrößerte Darstellung des Details Z aus Figur 1.

### Detaillierte Beschreibung der Zeichnungen

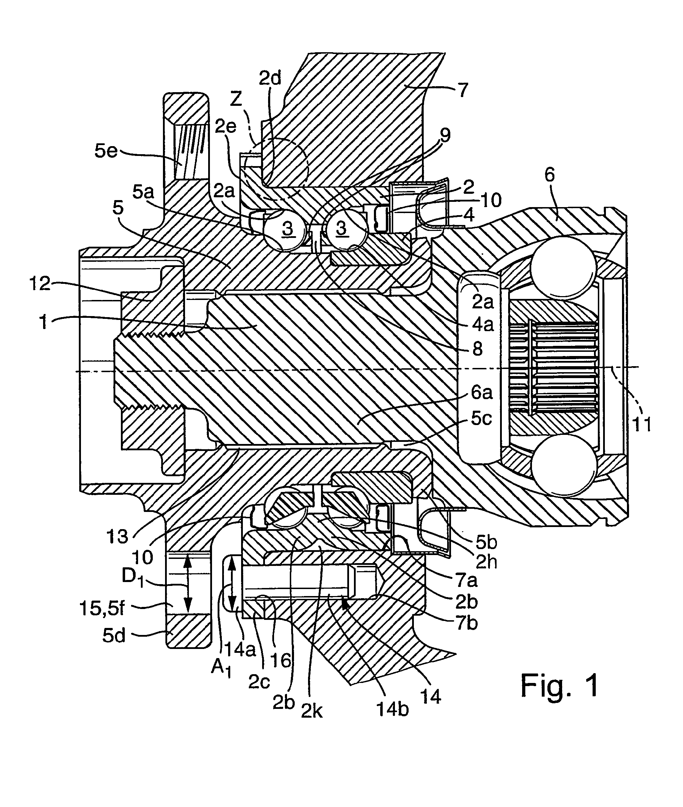

Figur 1 zeigt ein Radlagermodul 1 in einem Längsschnitt entlang einer Rotationsachse 11. Das Radlagermodul ist mit einem Außenring 2, mit zwei Reihen Wälzkörper 3, mit einem Innenring 4, mit einer Nabe 5 und mit einer Gelenkglocke 6 versehen. Die aus den Einzelteilen 2, 3, 4, 5, 6 vormontierte Baueinheit des Radlagermoduls sitzt in einem Radträger 7.

Das Radlager 8 aus dem Außenring 2, den Wälzkörpern 3, in diesem Beispiel in Form von Kugeln, aus Käfigen 9, Dichtungen 10, dem Innenring 4 und aus der Nabe 5 ist in sich selbst haltend vormontiert. Dazu sind die Wälzkörper 3 und der Innenring 4 mittels der Nabe 5 in dem Außenring 2 gehalten. Eine Reihe der Wälzkörper 3 stützt sich dabei an einer Laufbahn 2a des Außenringes 2 und an einer direkt an der Nabe 5 ausgebildeten Laufbahn 5a ab. Die andere Reihe der Wälzkörper 3 ist zwischen einer weiteren Laufbahn 2a und einer Laufbahn 4a des Innenringes 4 angeordnet. Das Radlager 8 ist mittels eines Bördelbordes 5b an der Nabe 5 über den Innenring 4 und den Außenring 2 spielfrei vorgespannt - zumindest dann, wenn das Radlager 8 in dem Radträger 7 montiert ist. Die Nabe 5 ist über den Bördelbord 5b unlösbar zum Radlager 8 fest.

Die Nabe 5 ist um eine Rotationsachse 11 im wesentlichen rotationssymmetrisch ausgebildet und weist ein axiales Durchgangsloch 5c auf. Ein Stummel 6a an der Gelenkglocke 6 durchgreift das Durchgangsloch 5c axial. Die Gelenkglocke 6 ist über eine Mutter 12 axial an der Nabe 5 gesichert. An der Nabe 5 ist ein radial nach außen weisender Radflansch 5d ausgebildet. Über Zahnprofile 13 an dem Stummel 6a sowie an der Nabe 5 ist eine um die Rotationsachse 11 drehfeste Verbindung zwischen der Gelenkglocke 6 und dem Radflansch 5d hergestellt.

An dem Radflansch 5d sind axiale Löcher 5e ausgebildet, in die nicht dargestellte Radbolzen zur Befestigung eines Fahrzeugesrades eingreifen. Weiterhin weist der Radflansch 5d axiale Ausnehmungen 5f auf, die zumindest einmal pro Umdrehung des Radflansches 5d um die Rotationsachse 11, einem Flansch 2c axial so gegenüber liegen, dass der Radflansch 5d aufgrund der Ausnehmungen 5f das Befestigungselement 14 axial nicht verdeckt. Der Durchmesser D₁ der als axiales Durchgangsloch 15 ausgeführten Ausnehmung 5f ist größer als die größte radiale Abmessung A₁ des Kopfes 14a.

Der Außenring 2 ist aus zwei hohlzylindrischen Abschnitten 2b und aus dem radialen Flansch 2c gebildet. Das Radlager 8 ist über die Abschnitte 2b in einem Loch 7a des Radträgers 7 radial abgestützt. Der Außenring 2 geht an einem der Abschnitte 2b über eine Kehle 2d radial in den Flansch 2c über. Der Flansch 2c liegt axial außen an dem Radträger 7 an und ist an der von dem Radträger 7 axial abgewandten Seite 2e von den Befestigungselementen 14 in Form von Bolzen hintergriffen. Das Befestigungselement 14 ist mit dem Kopf 14a axial fest gegen den Flansch 2c vorgespannt, da ein an dem Bolzen fester Schaft 14b axial in einem Befestigungsloch 7b des Radträgers 7 fest ist. Die Befestigungselemente 14 sind in die Befestigungslöcher 7b wahlweise eingepresst bzw. eingeschraubt.

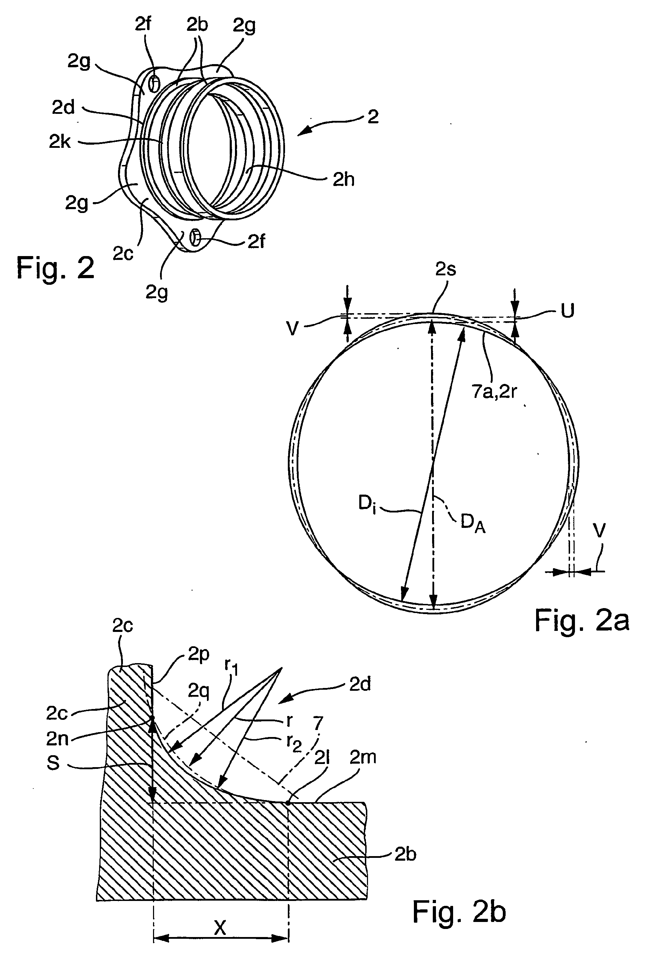

Figur 2 zeigt den Außenring 2 in einer Vollansicht. Der Außenring 2 ist ein durch Kaltumformen hergestelltes Bauteil, dessen Flansch 2c radial hervorstehende Abschnitte 2g aufweist. In drei der Abschnitte 2g sind die Außennehmungen 2f als axiale Durchgangslöcher 16 eingebracht.

In Figur 2a zeigt die Formabweichungen des Außenringes 2 als Einzelteil im Vergleich zu der Innengeometrie 2r des Loches 7a. Der Außenring 2 weist aufgrund seiner dünnen Wand nach dem Kaltumformen eine Außengeometrie 2r auf, deren Durchmesser D_{A} zunächst um das Übermaß 2 x U größer ist als der Innendurchmesser D_{I} des Loches 7a. Zusätzlich weicht die Außengeometrie 2s um das Maß 2 x V von der Innengeometrie 2r des Loches 7a ab. Nach der Montage des Außenringes 2 in das Loch 7a ist der Außenring 2 soweit eingeschnürt, dass die Außengeometrie 2s dem Durchmesser D_{I} und der Innengeometrie 2r im wesentlichen entspricht. I

Der Außenring 2 weist eine Radialschulter 2h auf. Die Radialschulter 2h ist zwischen den Laufbahnen 2a angeordnet, wobei die Laufbahnen 2a zumindest teilweise an der Radialschulter 2h ausgebildet sind. In den Außenring 2 ist radial von außen eine Ringnut 2k eingebracht. Die Ringnut 2k ist zum einen durch das Verdrängen von Material aus dem Außenring 2 zum Formen der Radialschulter 2h entstanden und verleiht zum anderen dem Außenring 2 im Bereich der Laufbahnen 2a eine gewisse Elastizität.

In Figur 2b, einer vergrößerten Darstellung des Details Z aus Figur 1, ist die Kehle 2d stark vergrößert und nicht maßstäblich dargestellt. Die Kehle 2d ist konkav ausgebildet und geht an einem ersten Übergang 2l in eine kreiszylindrische Mantelfläche 2m des Abschnittes 2b über. An dem Flansch 2c geht die Kehle 2d an dem Übergang 2n in eine kreisringförmige Fläche 2p über. Der senkrechte Abstand S zwischen der gedachten axialen Verlängerung der Mantelfläche 2m und dem Übergang 2n ist kleiner als ein zur Rotationsachse 11 paralleler Abstand X zwischen einer gedachten radialen Verlängerung der Kreisringfläche 2p und dem Übergang 2l.

Figur 2b zeigt auch, dass die Kontur der Kehle 2d in einem Längsschnitt durch den Außenring 2 von einer mit Strichpunktlinien dargestellten und durch einen Radius r beschriebenen Kontur 2q abweicht. Die Kehle 2d ist in dem Längsschnitt durch die Radien r₁ und r₂ beschrieben. Der Radius r₁ geht an dem Übergang 2n in den Flansch 2c und der Radius r₂ geht axial an dem Übergang 2l in den Abschnitt 2b über. Die Radien r₁ sowie r₂ gehen zwischen dem Flansch 2c und dem Abschnitt 2b ineinander über.

Der Radträger 7 liegt axial so an dem Flansch 2c und radial an dem Abschnitt 2b so an, dass der Radträger 7 und die Kehle 2d mindestens bis zu den Übergängen 2l und 2n zueinander beabstandet sind. Die Maximalspannungen radial unterhalb der Ausnehmungen 2f sind an der durch den Radius r beschriebnen Kontur 2q etwas um ein Drittel höher als die Spannungen in einer Kehle 2d, die durch die Radien r₁ und r₂ beschrieben ist.

### Bezugszeichen

- 1: Radlagermodul
- 2: Außenring
- 2a: Laufbahn
- 2b: Abschnitt
- 2c: Flansch
- 2d: Kehle
- 2e: Seite
- 2f: Ausnehmung
- 2g: Abschnitt
- 2h: Radialschulter
- 2k: Ringnut
- 2l: Übergang
- 2m: Mantelfläche
- 2n: Übergang
- 2p: Fläche
- 2q: Kontur
- 2r: Innengeometrie
- 2s: Außengeometrie
- 3: Wälzkörper
- 4: Innenring
- 4a: Laufbahn
- 5: Nabe
- 5a: Laufbahn

- 5b: Bördelbord
- 5c: Durchgangsloch
- 5d: Radflansch
- 5e: Löcher
- 5f: Ausnehmung
- 6: Gelenkglocke
- 6a: Stummel
- 7: Radträger
- 7a: Loch
- 8: Radlager
- 9: Käfige
- 10: Dichtung
- 11: Rotationsachse
- 12: Mutter
- 13: Zahnprofil
- 14: Befestigungselement
- 14a: Kopf
- 14b: Schaft
- 15: Loch
- 16: Loch

## Patentansprüche

1. Außenring (2) eines Radlagers (8) in einem Radträger (7), wobei der Außenring (2) mit einem hohlzylindrischen Abschnitt (2b) und mit einem von dem hohlzylindrischen Abschnitt (2b) radial nach außen abgehenden Flansch (2c) ausgebildet ist, wobei der Flansch (2c) an einer konkaven Kehle (2d) in den hohlzylindrischen Abschnnitt (2b) übergeht, wobei die Kehle (2d), In einem Längsschnitt durch den Außenring (2) entlang der Rotationsachse (11) des Außenringes (2) betrachtet, an einem ersten Übergang (2n) in eine Fläche (2p) des Flansches (2c) und an einem zweiten Übergang (2l) in eine Mantelfläche (2m) an dem hohlzylindrischen Abschnitt (2b) übergeht und wobei der senkrechte Abstand (S) zwischen einer gedachten axialen Verlängerung der Mantelfläche (2m) und dem ersten Übergang (2n) kleiner ist, als ein zur Rotationsachse (11) paralleler Abstand (X) zwischen einer gedachten radialen Verlängerung der Fläche (2p) des Flansches (2c) und dem zweiten Übergang (21), **dadurch gekennzeichnet, dass** der Außenring (2) zumindest abschnittsweise zumindest radial zur Rotationsachse (11) in dem Radträger (7) abgestützt ist und dabei der axial endseitig des Außenringes (2) ausgebildete Flansch (2c) axial an dem Radträger (7) anliegt, wobei der Radträger (7) axial so an dem Flansch (2c) und radial so an der Mantelfläche (2m) anliegt, dass der Radträger (7) und die Kehle (2d) mindestens bis zu den Übergängen zueinander beabstandet sind.

2. Außenring nach Anspruch 1, **dadurch gekennzeichnet, dass** das Verhältnis des senkrechten Abstandes (S) zu dem parallelen Abstand (X) mindestens 1:1,5 ist.

3. Außenring nach Anspruch 1, **dadurch gekennzeichnet, dass** die Kehle (2d) in dem Längsschnitt durch Radien beschrieben ist, wobei wenigstens ein erster Radius (r₁) radial an dem Übergang (2n) in den Flansch (2c) und wenigsten ein zweiter Radius (r₂) axial an dem Übergang (2l) in den hohlzylindrischen Abschnitt (2b) übergeht.

4. Außenring nach Anspruch 3, **dadurch gekennzeichnet, dass** der erste Radius (r₁) und der zweite Radius (r₂) zwischen dem Flansch (2c) und dem hohlzylindrischen Abschnitt (2b) ineinander übergehen.

5. Außenring nach Anspruch 4, **dadurch gekennzeichnet, dass** der erste Radius (r₁) kleiner als der zweite Radius (r₂) ist.

6. Außenring nach Anspruch 3 bis 5, **dadurch gekennzeichnet,** das das Verhältnis des ersten Radius zu dem zweiten Radius mindestens 1:2,5 Ist.

7. Außenring nach Anspruch 1, **dadurch gekennzeichnet, dass** der Außenring (2) mit dem Flansch (2c) eintellig kalt umgeformt ist.

8. Außenring nach Anspruch 1, **dadurch gekennzeichnet, dass** wenigstens ein Befestigungselement (14) den Flansch (2c) an einer von dem Radträger (7) axial abgewandten Seite (2e) des Flansches (2c) axial hintergreift und dabei das Befestigungselement (14) axial fest an Flansch (2c) anliegt, wobei das Befestigungselement (14) an dem Radträger (7) fest ist.

9. Außenring nach Anspruch 8, **dadurch gekennzeichnet, dass** das Befestlgungselement (14) ein Bolzen mit einem Kopf (14a) ist, wobei der Bolzen mit dem Kopf (14a) axial an dem Flansch (2c) anliegt und dabei axial eine Ausnehmung (2f) des Flansches (2c) durchgreifend an dem Radträger (7) befestigt ist.

10. Außenring nach Anspruch 9, **dadurch gekennzeichnet, dass** die Ausnehmungen (2f) radial nach außen offen sind.

## Claims

1. Outer ring (2) of a wheel bearing (8) in a wheel carrier (7), the outer ring (2) being formed by a hollow cylindrical section (2b) and having a flange (2c) which leads radially outwards from the hollow cylindrical section (2b), the flange (2c) on a concave channel (2d) merging into the hollow cylindrical section (2b), the channel (2d), as viewed in a longitudinal section through the outer ring (2) along the rotational axis (11) of the outer ring (2), merging into a face (2p) of the flange (2c) at a first transition (2n) and into a circumferential surface (2m) on the hollow cylindrical section (2b) at a second transition (21), and the perpendicular spacing (S) between an imaginary axial extension of the circumferential surface (2m) and the first transition (2n) being smaller than a spacing (X) which is parallel to the rotational axis (11) between an imaginary radial extension of the face (2p) of the flange (2c) and the second transition (21), **characterized in that** the outer ring (2) is supported at least in sections in the wheel carrier (7) at least radially with respect to the rotational axis (11), and the flange (2c) which is formed axially on the end side of the outer ring (2) bears axially against the wheel carrier (7) here, the wheel carrier (7) bearing axially against the flange (2c) and radially against the circumferential surface (2m) in such a way that the wheel carrier (7) and the channel (2d) are spaced apart from one another at least as far as the transitions.

2. Outer ring according to Claim 1, **characterized in that** the ratio between the perpendicular spacing (S) and the parallel spacing (X) is at least 1:1.5.

3. Outer ring according to Claim 1, **characterized in that** the channel (2d) is described in longitudinal section by radii, at least one first radius (r₁) merging radially into the flange (2c) at the transition (2n) and at least one second radius (r₂) merging axially into the hollow cylindrical section (2b) at the transition (21).

4. Outer ring according to Claim 3, **characterized in that** the first radius (r₁) and the second radius (r₂) merge into one another between the flange (2c) and the hollow cylindrical section (2b).

5. Outer ring according to Claim 4, **characterized in that** the first radius (r₁) is smaller than the second radius (r₂).

6. Outer ring according to Claims 3 to 5,
**characterized in that** the ratio between the first radius and the second radius is at least 1:2.5.

7. Outer ring according to Claim 1, **characterized in that** the outer ring (2) with the flange (2c) is cold formed in one piece.

8. Outer ring according to Claim 1, **characterized in that** at least one fastening element (14) engages axially behind the flange (2c) on a side (2e) of the flange (2c) which faces axially away from the wheel carrier (7), and the fastening element (14) bears axially fixedly here against the flange (2c), the fastening element (14) being fixed on the wheel carrier (7) .

9. Outer ring according to Claim 8, **characterized in that** the fastening element (14) is a bolt with a head (14a), the bolt with the head (14a) bearing axially against the flange (2c) and a recess (2f) of the flange (2c) being fastened here completely to the wheel carrier (7).

10. Outer ring according to Claim 9, **characterized in that** the recesses (2f) are open radially to the outside.

## Revendications

1. Bague extérieure (2) d'un roulement de roue (8) dans un support de roue (7), la bague extérieure (2) étant réalisée avec une portion cylindrique creuse (2b) et une bride (2c) partant radialement vers l'extérieur depuis la portion cylindrique creuse (2b), la bride (2c) se prolongeant au niveau d'une cannelure concave (2d) dans la portion cylindrique creuse (2b), la cannelure (2d), considérée en coupe longitudinale à travers la bague extérieure (2) le long de l'axe de rotation (11) de la bague extérieure (2), se prolongeant au niveau d'une première transition (2n) en une surface (2p) de la bride (2c) et au niveau d'une deuxième transition (21) en une surface d'enveloppe (2m) sur la portion cylindrique creuse (2b), et la distance perpendiculaire (5) entre un prolongement axial imaginaire de la surface d'enveloppe (2m) et la première transition (2n) étant inférieure à une distance parallèle à l'axe de rotation (11) entre un prolongement radial imaginaire de la surface (2p) de la bride (2c) et la deuxième transition (21), **caractérisée en ce que** la bague extérieure (2) est supportée au moins en partie au moins radialement à l'axe de rotation (11) dans le support de roue (7) et en l'occurrence, la bride (2c) réalisée axialement du côté de l'extrémité de la bague extérieure (2) s'applique axialement contre le support de roue (7), le support de roue (7) s'appliquant axialement contre la bride (2c) et radialement contre la surface d'enveloppe (2m) de telle sorte que le support de roue (7) et la cannelure (2d) soient espacés l'un de l'autre au moins jusqu'aux transitions.

2. Bague extérieure selon la revendication 1,
**caractérisée en ce que** le rapport de la distance perpendiculaire (5) à la distance parallèle (X) est d'au moins 1:1,5.

3. Bague extérieure selon la revendication 1,
**caractérisée en ce que** la cannelure (2d) en coupe longitudinale est décrite par des rayons, au moins un premier rayon (r1) se prolongeant radialement au niveau de la transition (2n) en la bride (2c), et au moins un deuxième rayon (r2) se prolongeant axialement au niveau de la transition (21) en la portion cylindrique creuse (2b).

4. Bague extérieure selon la revendication 3,
**caractérisée en ce que** le premier rayon (r1) et le deuxième rayon (r2) se prolongent l'un dans l'autre entre la bride (2c) et la portion cylindrique creuse (2b).

5. Bague extérieure selon la revendication 4,
**caractérisée en ce que** le premier rayon (r1) est plus petit que le deuxième rayon (r2).

6. Bague extérieure selon les revendications 3 à 5, **caractérisée en ce que** le rapport du premier rayon au deuxième rayon est d'au moins 1:2,5.

7. Bague extérieure selon la revendication 1,
**caractérisée en ce que** la bague extérieure (2) est façonnée à froid d'une seule pièce avec la bride (2c).

8. Bague extérieure selon la revendication 1,
**caractérisée en ce qu'**au moins un élément de fixation (14) vient en prise axialement par l'arrière avec la bride (2c) au niveau de son côté (2e) de bride (2c) opposé axialement au support de roue (7), et en l'occurrence l'élément de fixation (14) s'applique axialement fixement contre la bride (2c), l'élément de fixation (14) étant fixé au support de roue (7).

9. Bague extérieure selon la revendication 8,
**caractérisée en ce que** l'élément de fixation (14) est un boulon ayant une tête (14a), le boulon avec sa tête (14a) s'appliquant axialement contre la bride (2c) et en l'occurrence est fixé axialement au support de roue (7) en venant en prise à travers un évidement (2f) de la bride (2c).

10. Bague extérieure selon la revendication 9,
**caractérisée en ce que** les évidements (2f) sont ouverts radialement vers l'extérieur.
